(19) Europäisches Patentamt
European Patent Office
Office européen des brevets

(11) Veröffentlichungsnummer : **0 392 979 B1**

# (12) EUROPÄISCHE PATENTSCHRIFT

(45) Veröffentlichungstag der Patentschrift : **29.06.94 Patentblatt 94/26**

(51) Int. Cl.$^5$ : **C08F 222/40,** C08G 73/12

(21) Anmeldenummer : **90810278.3**

(22) Anmeldetag : **05.04.90**

## (54) Härtbare, ein Bismaleinimid und eine Propenylverbindung enthaltende Gemische.

(30) Priorität : **14.04.89 CH 1423/89**

(43) Veröffentlichungstag der Anmeldung : **17.10.90 Patentblatt 90/42**

(45) Bekanntmachung des Hinweises auf die Patenterteilung : **29.06.94 Patentblatt 94/26**

(84) Benannte Vertragsstaaten : **CH DE ES FR GB IT LI NL SE**

(56) Entgegenhaltungen :
**EP-A- 0 230 741**
**EP-A- 0 253 600**

(73) Patentinhaber : **CIBA-GEIGY AG**
**Klybeckstrasse 141**
**CH-4002 Basel (CH)**

(72) Erfinder : **Kramer, Andreas, Dr.**
**Bundtels**
**CH-3186 Düdingen (CH)**

EP 0 392 979 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft härtbare Gemische enthaltend ein aromatisches, alkylsubstituiertes Bismaleinimid und eine Propenylverbindung sowie die daraus durch Härtung erhaltenen vernetzten und unschmelzbaren Produkte.

Härtbare Gemische auf Basis von aromatischen Bismaleinimiden und Propenylverbindungen sind bekannt, beispielsweise aus der Publikation von H.D. Stenzenberger et al., betreffend Allyl(propenyl)-terminated arylene-ether-sulfone oligomers as co-reactive intermediates for tough bismaleimides, 18th International SAMPE Technical Conference, October 7-9, 1986, Seite 500-509, sowie aus den EP-Patentanmeldungen 230 741 und 276 737. In all diesen Publikationen wird als Bismaleinimid kein ringsubstituiertes N,N′-4,4′-Methylen-bis-(phenylmaleinimid) eingesetzt oder deren Verwendung empfohlen oder nahegelegt. Diese bekannten härtbaren Gemische lassen hinsichtlich ihrer Verarbeitbarkeit, insbesondere in der Schmelze, noch zu wünschen übrig.

Es wurde nun gefunden, dass man bei Verwendung von aromatischen, in o,o′-Stellung zur Imidgruppe alkylsubstituierten Methylen-bis-(phenylmaleinimiden) eine bessere Mischbarkeit mit Propenylverbindungen erreicht und dass solche härtbaren Gemische bei erhöhter Temperatur, wie beispielsweise 120°C, längere, also günstigere Verarbeitungszeiten (pot life), aufweisen. Die aus den erfindungsgemässen härtbaren Gemischen durch Härtung hergestellten Formstoffe weisen ausserdem bessere Zähigkeitseigenschaften und eine bessere Feuchtigkeitsresistenz auf.

Gegenstand vorliegender Erfindung sind somit härtbare Gemische enthaltend

a) ein aromatisches Bismaleinimid der Formel I

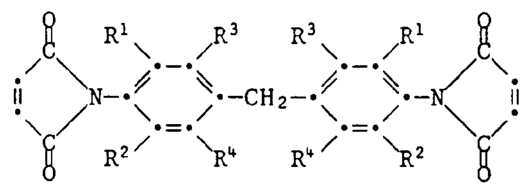

(I),

worin $R^1$ und $R^2$ gleich oder verschieden sind und je ein $C_1$-$C_4$-Alkyl bedeuten und $R^3$ und $R^4$ unabhängig voneinander je für ein Wasserstoff-oder Halogenatom stehen, und

b) eine Propenylverbindung der Formel II

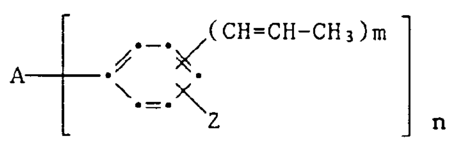

(II),

worin m und n unabhängig voneinander je für die Zahl 1 oder 2 stehen, Z ein Wasserstoffatom oder ein $C_1$-$C_4$-Alkoxy bedeutet und A einen Rest der Formel IIa, IIb oder IIc

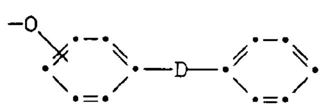

(IIa)

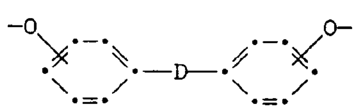

(IIb)

oder

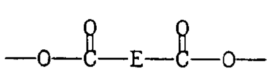

(IIc)

bedeutet, worin D für $-SO_2-$, -CO- oder einen Rest der Formel III oder IV

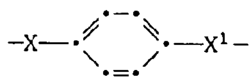 (III) oder 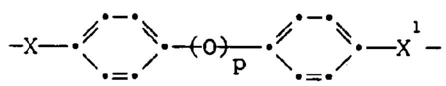 (IV)

steht, worin X und $X^1$ unabhängig voneinander je für -CO-, $-SO_2-$ oder -O- stehen und p Null oder die Zahl 1 bedeutet, E Phenylen oder einen Rest der Formel V

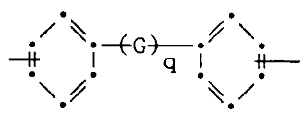 (V)

bedeutet, worin G für 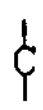 $(CH_3)_2$, 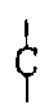 $(CF_3)_2$, -O-, $-CH_2-$ oder -CO-steht und q Null oder die Zahl 1 bedeutet.

Im allgemeinen enthalten die erfindungsgemässen Gemische pro Mol der Komponente (a) 0,05 bis 2,0 Mole, vorzugsweise 0,5 bis 1,2 Mole, der Komponente (b).

Vorzugsweise sind in den erfindungsgemässen Gemischen als Komponente (a) solche aromatische Bismaleinimide enthalten, worin in Formel I $R^1$ und $R^2$ unabhängig voneinander je für Methyl, Ethyl oder Isopropyl stehen und $R^3$ und $R^4$ je ein Wasserstoff- oder Chloratom bedeuten.

Insbesondere verwendet man für die erfindungsgemässen Gemische solche Bismaleinimide der Formel I, worin $R^1$ und $R^2$ unabhängig voneinander je für Methyl, Ethyl oder Isopropyl stehen und $R^3$ und $R^4$ je ein Wasserstoffatom bedeuten.

Beispiele für geeignete Bismaleinimide der Formel I sind N,N'-4,4'-Methylen-bis-(2-ethyl-6-methylphenylmaleinimid) und N,N'-4,4'-Methylen-bis-(2,6-dimethylphenylmaleinimid), welche besonders bevorzugte Verbindungen für (a) darstellen, sowie N,N'-4,4'-Methylen-bis-(2,6-diethylphenylmaleinimid), N,N'-4,4'-Methylen-bis-(2,6-diisopropylphenylmaleinimid), N,N'-4,4'-Methylen-bis-(2-ethyl-6-isopropylphenylmaleinimid) und N,N'-4,4'-Methylen-bis-(3-chlor-2,6-diethylphenylmaleinimid).

Als Komponente (a) kann auch ein Gemisch aus einem Bismaleinimid der Formel I und einem unsubstituierten Bismaleinimid der Formel I ($R^1$ bis $R^4$ = H) eingesetzt werden, wobei im Gemisch der Anteil an unsubstituiertem Bismaleinimid bis etwa 60 Mol%, bezogen auf die Gesamtmenge von Bismaleinimiden, betragen kann.

Die Bismaleinimide der Formel I stellen zum Teil bekannte Verbindungen dar und können beispielsweise gemäss dem in der JP-Anmeldung Kokai 61-93159 offenbarten Verfahren hergestellt werden, indem man 1 Mol eines Diamins der Formel Ia

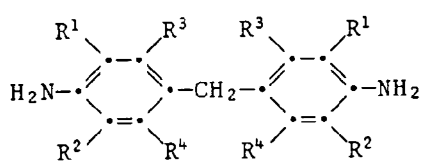 (Ia),

worin $R^1$, $R^2$, $R^3$ und $R^4$ die gleiche Bedeutung wie in Formel I haben, mit 2 Mol Maleinsäureanhydrid in einem organischen Lösungsmittel zur entsprechenden Bismaleinamidsäure umsetzt und diese anschliessend mit wasserentziehenden Mitteln, wie beispielsweise Acetanhydrid, zum Bismaleinimid cyclisiert.

Die Diamine der Formel Ia stellen bekannte Verbindungen dar und werden beispielsweise in der DE-OS 23 39 237 oder in der EP-A-0 171 588 offenbart.

Die erfindungsgemässen Gemische enthalten als Komponente (b) vorzugsweise eine Verbindung der Formel II, worin m für die Zahl 1 oder 2 und n für die Zahl 1 stehen, Z ein Wasserstoffatom oder Methoxy und A einen Rest der Formel IIb oder IIc bedeuten.

Vorzugsweise enthalten die erfindungsgemassen Gemische als Komponente (1b) eine Verbindung der Formel II, worin A für einen Rest der Formel IIb steht, wobei D für $-SO_2-$, -CO-,

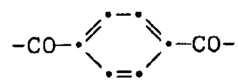

oder einen Rest der Formel IV steht, worin X und $X^1$ je -CO- oder $-SO_2-$ bedeuten und p für Null steht.

Auch sind in den erfindungsgemässen Gemischen solche Verbindungen der Formel II bevorzugt, worin A für einen Rest der Formel IIc steht, wobei E Phenylen oder einen Rest der Formel V bedeutet, worin q für Null steht.

Beispiele für geeignete Propenylverbindungen der Formel II sind 4,4′-Bis-(o-propenylphenoxy)-benzophenon und 4,4′-Bis-(o-propenylphenoxy)-diphenylsulfon, welche besonders bevorzugte Verbindungen für die Komponente (b) darstellen, sowie die Verbindungen der folgenden Formeln

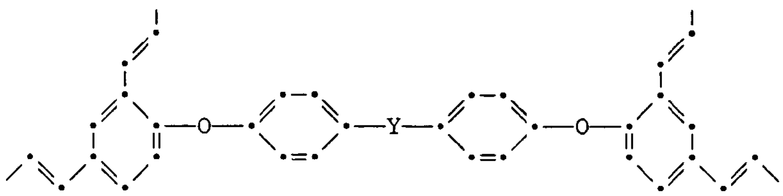 ,

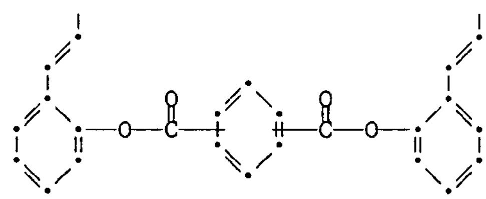 ,

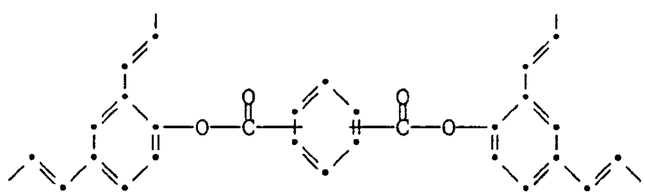 ,

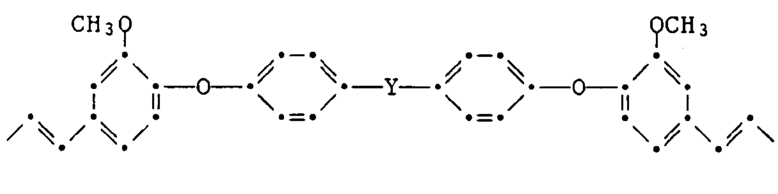 ,

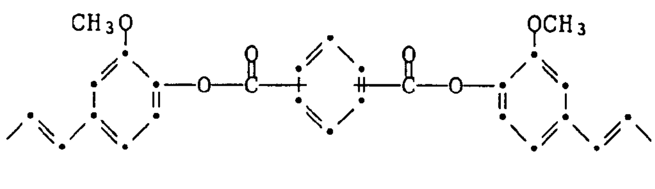 ,

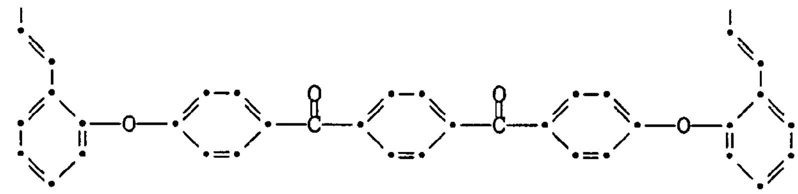

oder

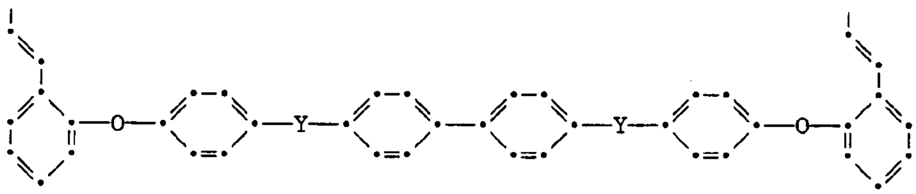

,

worin Y für den Rest

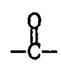

oder $-SO_2-$ steht.

Die Propenylverbindungen der Formel II sind bekannt, beispielsweise aus der eingangs genannten SAMPE-Publikation und den EP-Patentanmeldungen 230 741 und 276 737, und können nach dem dort offenbarten Verfahren hergestellt werden, indem man beispielsweise eine Dihalogenverbindung der Formel VI

$A(Hal)_n$ (VI),

worin A und n die gleiche Bedeutung wie in Formel II haben und Hal für ein Halogenatom, vorzugsweise Chloratom, steht, mit einem Allylphenol der Formel VII

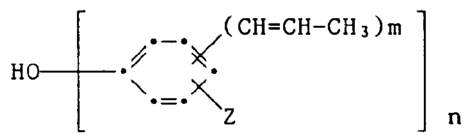

(VII),

worin Z und m die gleiche Bedeutung wie in Formel II haben, in Gegenwart einer Base zu einer Verbindung der Formel II umsetzt.

Die Umsetzung erfolgt vorzugsweise bei Temperaturen zwischen 120 bis 220°C in einem organischen Lösungsmittel, wie beispielsweise Dimethylformamid, Dimethylacetamid, N-Methylpyrrolidon oder Dimethylsulfoxid, in Gegenwart einer Base, wie beispielsweise Kaliumcarbonat, wobei bekannterweise die Isomerisation der Allylgruppe zur Propenylgruppe eintritt.

Die Dihalogenverbindungen der Formel VI und die Allylphenole der Formel VII, wie beispielsweise 2-Allylphenol, 2,4-Diallylphenol oder Eugenol, stellen ebenfalls bekannte Verbindungen dar. Propenylverbindungen der Formel II sind zum Teil auch im Handel erhältlich, beispielsweise unter der Produktebezeichnung TM 123 (4,4'-Bis-(o-propenylphenoxy)-benzophenon) und TM 122 (4,4'-Bis-(o-propenylphenoxy)-diphenylsulfon) von der Technochemie GmbH, DE-Dossenheim.

Die erfindungsgemässen Gemische können durch blosses Zusammenmischen der Komponenten oder durch Erhitzen des Gemisches bei 75 bis 130°C während etwa 15 bis 60 Minuten, hergestellt werden. Um die Umsetzung zu erleichtern, können auch Lösungsmittel, besonders flüchtige Lösungsmittel, wie chlorierte Kohlenwasserstoffe, Ester oder Tetrahydrofuran eingesetzt werden. Das Lösungsmittel wird nach der Umsetzung entfernt.

Die Härtung der erfindungsgemässen Gemische erfolgt im allgemeinen bei Temperaturen zwischen 100 und 280°C während einer für die Härtung ausreichenden Zeit.

Während der Härtung entsteht ein Netzwerk mit hoher Vernetzungsdichte. Der hier verwendete Ausdruck Härtung bedeutet daher die Umwandlung von Gemischen in unlösliche und nichtschmelzbare vernetzte Produkte, mit gleichzeitiger Formung zu geformten Artikeln wie z.B. Giesskörpern, Presskörpern, Laminaten, oder zu zweidimensionalen Strukturen, wie z.B. Ueberzügen, Emaillen und Klebverbindungen. Die hergestellten Ueberzüge zeichnen sich z.B. durch erhöhte Zähigkeit, insbesondere Bruchzähigkeit, aus.

Die erfindungsgemässen Gemische können in jeder Verarbeitungsphase vor der Härtung mit den üblichen Modifizierungsmitteln vermischt werden, wie z.B. Streckmittel, Füllstoffe und Verstärkungsmittel, Pigmente, Farbstoffe, organische Lösungsmittel, Plastifizierungsmittel, Mittel zur Verbesserung der Trockenklebrigkeit (Klebrigmacher), Gummis, Beschleuniger oder Verdünner. Als Streckmittel, Verstärkungsmittel, Füllstoffe und Pigmente kommen z.B. in Frage: Kohleteer, Bitumen, Glasfasern, Borfasern, Kohlefasern, Cellulose, Polyethylenpulver, Polypropylenpulver, Glimmer, Asbest, Quarzpulver, Gips, Antimontrioxid, Bentone, Siliziumdioxidaerogel ("Aerosil"), Lithopon, Barit, Titandioxid, Russ, Graphit, Eisenoxid oder Metallpulver wie z.B. Aluminiumpulver oder Eisenpulver. Den härtbaren Gemischen können auch andere übliche zusätze, wie z.B. Flammschutzmittel, Thixotropiemittel, Verlaufsmittel, wie Silicone, Celluloseacetatbutyrat, Polyvinylbutyrat, Wachse, Stearate und ähnliches (welche zum Teil auch als Formtrennmittel verwendet werden) beigegeben werden.

Wenn die erfindungsgemässen Gemische beispielsweise als Klebstoffformulierungen verwendet werden, können auch carboxylgruppenendständiger Acrylnitril-Butadien-Kautschuk, Modifizierungsharze, wie Triglycidyl-p-aminophenol, und Beschleuniger, wie Bortrifluorid-Monoethylaminkomplexe oder Imidazolkomplexe, beigegeben werden.

Die härtbaren Gemische können auf übliche Art unter Verwendung bekannter Mischaggregate, wie Rührer, Kneter, Walzkörper und ähnliches, hergestellt werden.

Die erfindungsgemässen Gemische zeichnen sich durch eine sehr gute Verarbeitbarkeit, gute Löslichkeit in üblichen organischen Lösungsmitteln, gute Stabilität in der Schmelze oder in Lösung sowie durch gute thermische und mechanische Eigenschaften der gehärteten Produkte, insbesondere durch hohe Bruchzähigkeiten aus. Die erhaltenen Produkte weisen auch gute elektrische Eigenschaften auf, haben hohe Glasumwandlungstemperaturen und sind nicht brüchig Die erfindungsgemässen Gemische können auch problemlos als Schmelze, besonders ohne Zugabe von nichtflüchtigen Lösungsmsitteln, z.B. für die Imprägnierung, verwendet werden.

Gegenstand der vorliegenden Erfindung sind daher auch die durch Härtung der erfindungsgemässen Gemische erhaltenen vernetzten, unschmelzbaren Produkte.

Die beschriebenen erfindungsgemässen Gemische können auf verschiedenen Gebieten eingesetzt werden, wie z.B in Prepregs, Laminaten, Verbundstoffen, Leiterplatten, Giesslingen, Formkörpern, Klebstoffen und Ueberzügen. Von besonderem Interesse ist ihre Anwendung für die Herstellung von faserverstärkten Verbundstoffen, welche z.B. in der Luftfahrtindustrie sehr wichtig sind. So können die modifizierten Harze zum Präimprägnieren von verschiedenem faserartigem Material verwendet werden, welches als Deckschicht für Honigwabenstrukturen oder als Strukturteile eingesetzt wird. Verfahren zur Herstellung von Prepregs sind dem Fachmann bekannt. Als faserartige Materialien können z.B. Graphit, Glas, Kevlar verwendet werden. Auch Verfahren zur Herstellung von Laminaten sind bekannt.

Laminate verschiedenster Dicke können z.B. durch Pressformen oder Autoklavformen hergestellt werden. Die erfindungsgemässen Gemische können auch erfolgreich als haftvermittelnde Substanzen eingesetzt werden.

In den folgenden Beispielen sind einige bevorzugte Ausführungsformen der vorliegenden Erfindung beschrieben.

Herstellung von N,N′-4,4′-Methylen-bis-(2-ethyl-6-methylphenylmaleinimid)

Zu einer Lösung von 216 g Maleinsäureanhydrid in 2000 ml Aceton wird bei 0°C eine Lösung von 1,0 Mol Bis-(4-amino-2-ethyl-6-methylphenyl)-methan in 1000 ml Aceton innerhalb 1 Stunde zugetropft. Man rührt 2 Stunden bei Raumtemperatur nach und gibt dann 780 ml Acetanhydrid, 90 ml Triethylamin und 14,4 g Nickel(II)acetat-tetrahydrat hinzu. Nach 20 Stunden bei Raumtemperatur destilliert man etwa 2/3 des Acetons im Vakuum ab. Den Rückstand giesst man unter Rühren auf 5 l Wasser. Der Niederschlag wird abfiltriert, mehrmals mit Wasser gewaschen und im Vakuumschrank bei 70°C getrocknet.
Ausbeute: 415 g (94 % der Theorie). Schmelzpunkte (DSC): 153°C.

Beispiel 1: Man schmilzt 8,85 g (0,02 Mol) N,N′-4,4′-Methylen-bis-(2-ethyl-6-methylphenylmaleinimid) und 8,93 g (0,02 Mol) 4,4′-Bis-(o-propenylphenoxy)-benzophenon (TM 123, Handelsprodukt der

Technochemie GmbH, DE-Dossenheim) bei 150°C auf. Die bei Raumtemperatur feste, rotgelbe Mischung zeigt bei der Differentialthermoanalyse [1] einen Reaktionsbeginn $T_A$ bei 170°C und ein Reaktionsmaximum $T_{max}$ bei 276°C. Die integrale Reaktionswärme ΔH der Härtung beträgt 300 J/g. Das bei 150°C dünnflüssige Harz giesst man in ein Reagenzglas und härtet 4 Stunden (h) bei 200°C, 1 h bei 220°C und 6 h bei 250°C. Man erhält einen blasenfreien, transparenten Festkörper mit einem Tg [2] onset (TMA) von 300°C.

Beispiel 2-4: Nach dem in Beispiel 1 beschriebenen Verfahren werden weitere Gemische hergestellt und zu Polymeren verarbeitet. Die Zusammensetzung dieser Gemische, deren Eigenschaften und die Glasumwandlungstemperatur nach der Härtung sind in der folgenden Tabelle I zusammengefasst.

Tabelle I

| Beispiele | | | 2 | 3 | 4 |
|---|---|---|---|---|---|
| N,N'-4,4'-Methylen-bis-(2-ethyl-6-methylphenylmaleinimid) | | | 13,3 g (0,03 Mol) | - | 11,1 g (0,025 Mol) |
| N,N'-4,4'-Methylen-bis-(2,6-dimethylphenylmaleinimid | | | - | 10,4 g (0,025 Mol) | - |
| 4,4'-Bis-(o-propenylphenoxy)-benzophenon | | | 6,7 g (0,015 Mol) | 11,2 g (0,025 Mol) | - |
| 4,4'-Bis-(o-propenylphenoxy)-diphenylsulfon (TM 122 der Technochemie GmbH) | | | - | - | 12,1 g (0,025 Mol) |
| Viskosität bei 120°C (mPas) | | | 997 | 2070 | 730 |
| DSC: | $T_A$ | (°C) | 168 | 170 | 142 |
| | $T_{max}$ | (°C) | 274 | 246/320 | 302 |
| | ΔH | (kJ/kg) | 239 | 184 | 235 |
| Tg onset (TMA) | C°C) | a) | 306 | 257 | 240 |
| | | b) | | 260 | 241 |

a) Härtung: 4 h bei 200°C, 2 h bei 220°C und 6 h bei 250°C.

b) Härtung: 4 h bei 200°C, 2 h bei 220°C und 6 h bei 280°C.

## Patentansprüche

### Patentansprüche für folgende Vertragsstaaten : CH, DE, FR, GB, IT, LI, NL, SE

1. Härtbare Gemische enthaltend
   a) ein aromatisches Bismaleinimid der Formel I

[1] gemessen mit TA 3000 der Firma Mettler AG, CH-Greifensee

[2] Tg-onset = Schnittpunkt der verlängerten Basislinie mit der Tangente an die Messkurve im Bereich des steilsten Anstieges (gemessen mit TMA-943, Dupont 9900 Thermoanalyse)

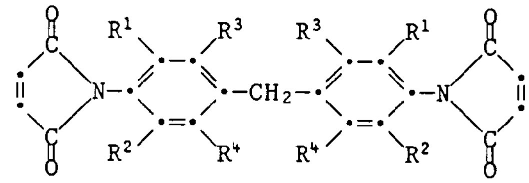

(I),

worin $R^1$ und $R^2$ gleich oder verschieden sind und je ein $C_1$-$C_4$-Alkyl bedeuten und $R^3$ und $R^4$ unabhängig voneinander je für ein Wasserstoff-oder Halogenatom stehen, und
b) eine Propenylverbindung der Formel II

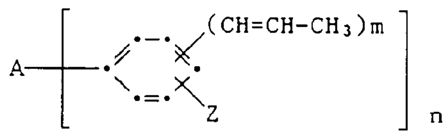

(II),

worin m und n unabhängig voneinander je für die Zahl 1 oder 2 stehen, Z ein Wasserstoffatom oder ein $C_1$-$C_4$-Alkoxy bedeutet und A einen Rest der Formel IIa, IIb oder IIc

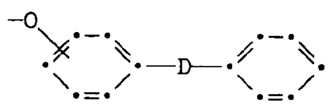

(IIa)

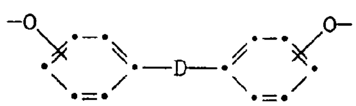

(IIb)

oder

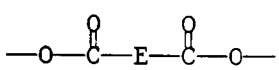

(IIc)

bedeutet, worin D für $-SO_2-$, -CO- oder einen Rest der Formel III oder IV

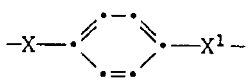 (III) oder 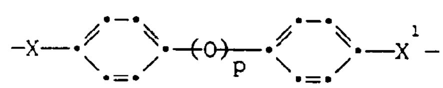 (IV)

steht, worin X und $X^1$ unabhängig voneinander je für -CO-, $-SO_2-$ oder -O-stehen und p Null oder die Zahl 1 bedeutet, E Phenylen oder einen Rest der Formel V

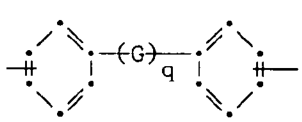

(V)

bedeutet, worin G für $C(CH_3)_2$, $C(CF_3)_2$, -O-, $-CH_2-$ oder -CO- steht und q Null oder die Zahl 1 bedeutet.

**2.** Gemische gemäss Anspruch 1, worin pro Mol der Komponente (a) 0,05 bis 2,0 Mole, vorzugsweise 0,5 bis 1,2 Mole, der Komponente (b) enthalten sind.

3. Gemische gemäss Anspruch 1, worin in Formel I $R^1$ und $R^2$ unabhängig voneinander je für Methyl, Ethyl oder Isopropyl stehen und $R^3$ und $R^4$ je ein Wasserstoff- oder Chloratom bedeuten.

4. Gemische gemäss Anspruch 1, worin in Formel I $R^1$ und $R^2$ unabhängig voneinander je für Methyl, Ethyl oder Isopropyl stehen und $R^3$ und $R^4$ je ein Wasserstoffatom bedeuten.

5. Gemische gemäss Anspruch 1 enthaltend als Komponente (a) N,N'-4,4'-Methylen-bis-(2-ethyl-6-methylphenylmaleinimid) oder N,N'-4,4'-Methylen-bis-(2,6-dimethylphenylmaleinimid).

6. Gemische gemäss Anspruch 1, enthaltend eine Verbindung der Formel II, worin m für die Zahl 1 oder 2 und n für die Zahl 1 stehen, Z ein Wasserstoffatom oder Methoxy und A einen Rest der Formel IIb oder IIc bedeuten.

7. Gemische gemäss Anspruch 6, enthaltend eine Verbindung der Formel II, worin A für einen Rest der Formel IIb steht, wobei D für $-SO_2-$, -CO-,

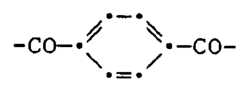

oder einen Rest der Formel IV steht, worin X und $X^1$ je -CO- oder $-SO_2-$ bedeuten und p für Null steht.

8. Gemische gemäss Anspruch 6, enthaltend eine Verbindung der Formel II, worin A für einen Rest der Formel IIc steht, wobei E Phenylen oder einen Rest der Formel V bedeutet, worin q für Null steht.

9. Gemische gemäss Anspruch 1, enthaltend als Komponente (b) 4,4'-Bis-(o-propenylphenoxy)-benzophenon oder 4,4'-Bis-(o-propenylphenoxy)-diphenylsulfon.

10. Die durch Härtung der Gemische gemäss Anspruch 1 erhaltenen vernetzten, unschmelzbaren Produkte.

**Patentansprüche für folgende Vertragsstaaten : ES**

1. Verfahren zur Herstellung von vernetzten, unschmelzbaren Produkten, dadurch gekennzeichnet, dass man ein härtbares Gemisch enthaltend

a) ein aromatisches Bismaleinimid der Formel I

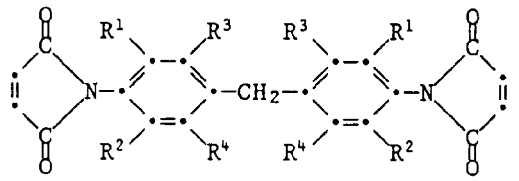

(I),

worin $R^1$ und $R^2$ gleich oder verschieden sind und je ein $C_1$-$C_4$-Alkyl bedeuten und $R^3$ und $R^4$ unabhängig voneinander je für ein Wasserstoff-oder Halogenatom stehen, und

b) eine Propenylverbindung der Formel II

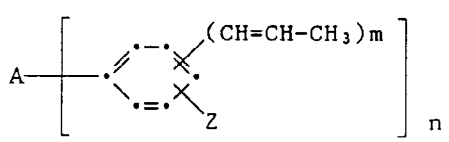

(II),

worin m und n unabhängig voneinander je für die Zahl 1 oder 2 stehen, Z ein Wasserstoffatom oder ein $C_1$-$C_4$-Alkoxy bedeutet und A einen Rest der Formel IIa, IIb oder IIc

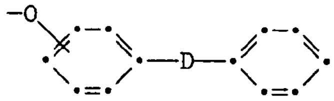 (IIa)

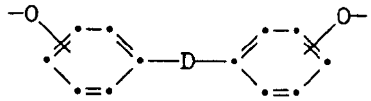 (IIb)

oder

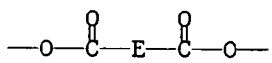 (IIc)

bedeutet, worin D für $-SO_2-$, -CO- oder einen Rest der Formel III oder IV

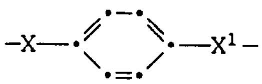 (III) oder 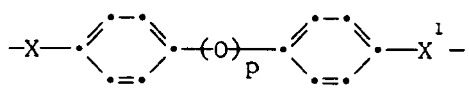 (IV)

steht, worin X und $X^1$ unabhängig voneinander je für -CO-, $-SO_2-$ oder -O-stehen und p Null oder die Zahl 1 bedeutet, E Phenylen oder einen Rest der Formel V

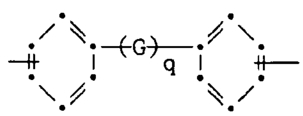 (V)

bedeutet, worin G für 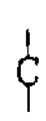 $(CH_3)_2$, 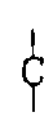 $(CF_3)_2$, -O-, $-CH_2-$ oder -CO- steht und q Null oder die Zahl 1 bedeutet, im Temperaturbereich von 100 bis 280°C aushärtet.

2. Verfahren gemäss Anspruch 1, dadurch gekennzeichnet, dass im Gemisch pro Mol der Komponente (a) 0,05 bis 2,0 Mole, vorzugsweise 0,5 bis 1,2 Mole, der Komponente (b) enthalten sind.

## Claims

### Claims for the following Contracting States : CH, DE, FR, GB, IT, LI, NL, SE

1. A curable mixture comprising
(a) an aromatic bismaleimide of formula I

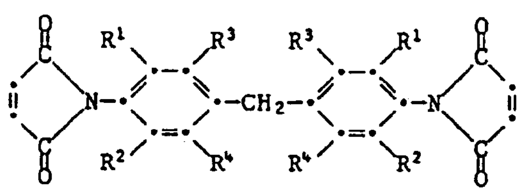 (I),

in which $R^1$ and $R^2$ are identical or different and each is $C_1$-$C_4$alkyl, and $R^3$ and $R^4$ are each independently of the other a hydrogen or halogen atom, and

b) a propenyl compound of formula II

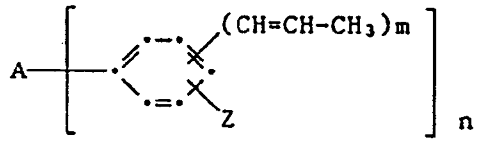 (II),

in which m and n are each independently of the other 1 or 2, Z is a hydrogen atom or $C_1$-$C_4$alkoxy, and A is a radical of formula IIa, IIb or IIc

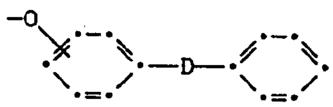 (IIa)

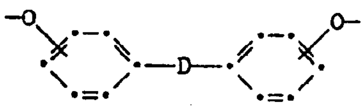 (IIb)

or

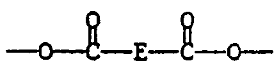 (IIc)

in which D is $-SO_2-$ or -CO- or is a radical of formula III or IV

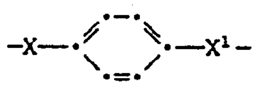 (III) or 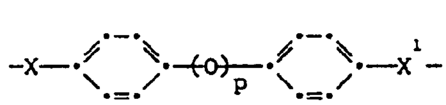 (IV)

in which X and $X^1$ are each independently of the other -CO-, $-SO_2-$ or -O-, and p is 0 or 1, E is phenylene or a radical of formula V

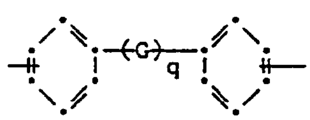 (V)

in which G is 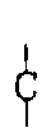 $(CH_3)_2$, 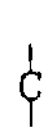 $(CF_3)_2$, -O-, $-CH_2-$ or -CO- and q is 0 or 1.

**2.** A mixture according to claim 1, which contains 0.05 to 2.0 moles, preferably 0.5 to 1.2 moles, of component (b) per mole of component (a).

**3.** A mixture according to claim 1, wherein in formula I $R^1$ and $R^2$ are each independently of the other methyl, ethyl or isopropyl, and $R^3$ and $R^4$ are each a hydrogen or chlorine atom.

**4.** A mixture according to claim 1, wherein in formula I $R^1$ and $R^2$ are each independently of the other methyl, ethyl or isopropyl, and $R^3$ and $R^4$ are each a hydrogen atom.

**5.** A mixture according to claim 1, wherein component (a) is N,N'-4,4'-methylenebis(2-ethyl-6-methylphenylmaleimide) or N,N'-4,4'-methylenebis(2,6-dimethylphenylmaleimide).

6. A mixture according to claim 1, which contains a compound of formula II in which m is 1 or 2 and n is 1, Z is a hydrogen atom or methoxy, and A is a radical of formula IIb or IIc.

7. A mixture according to claim 6, which contains a compound of formula II in which A is a radical of formula IIb, where D is $-SO_2-$, -CO-,

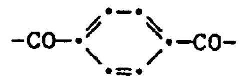

or a radical of formula IV, in which X and $X^1$ are each -CO- or $-SO_2-$ and p is 0.

8. A mixture according to claim 6, which contains a compound of formula II in which A is a radical of formula IIc where E is phenylene or a radical of formula V in which q is 0.

9. A mixture according to claim 1, wherein component (b) is 4,4'-bis(o-propenylphenoxy)benzophenone or 4,4'-bis(o-propenylphenoxy)diphenyl sulfone.

10. A crosslinked, infusible product obtained by curing a mixture according to claim 1.

**Claims for the following Contracting State : ES**

1. A process for producing a crosslinked, infusible product, which comprises curing a curable mixture comprising
(a) an aromatic bismaleimide of formula I

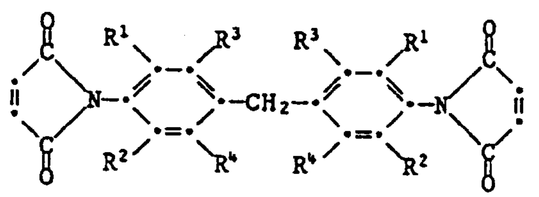

(I),

in which $R^1$ and $R^2$ are identical or different and each is $C_1$-$C_4$alkyl, and $R^3$ and $R^4$ are each independently of the other a hydrogen or halogen atom, and
b) a propenyl compound of formula II

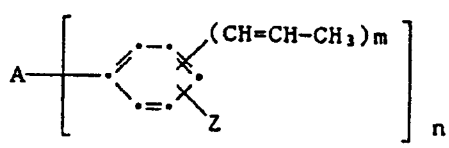

(II),

in which m and n are each independently of the other 1 or 2, Z is a hydrogen atom or $C_1$-$C_4$alkoxy, and A is a radical of formula IIa, IIb or IIc

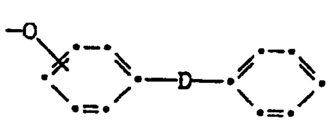

(IIa)

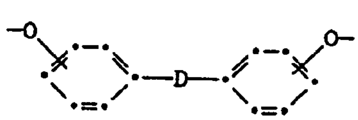

(IIb)

or

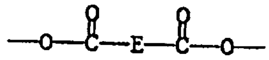 (IIc)

in which D is $-SO_2-$ or -CO- or is a radical of formula III or IV

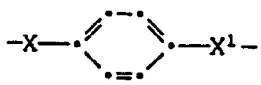 (III) or 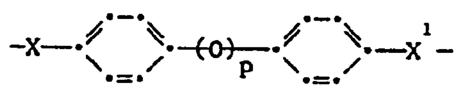 (IV)

in which X and $X^1$ are each independently of the other -CO-, $-SO_2-$ or -O-, and p is 0 or 1, E is phenylene or a radical of formula V

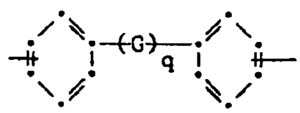 (V)

in which G is 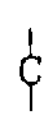 $(CH_3)_2$, 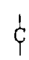 $(CF_3)_2$, -O-, $-CH_2-$ or -CO- and q is 0 or 1, in the temperature range from 100 to 280°C.

2. A process according to claim 1, wherein the mixture contains 0.05 to 2.0 moles, preferably 0.5 to 1.2 moles, of component (b) per mole of component (a).

## Revendications

**Revendications pour les Etats contractants suivants : CH, DE, FR, GB, IT, LI, NL, SE**

1. Mélanges durcissables contenant

a) un bismaléimide aromatique de formule I

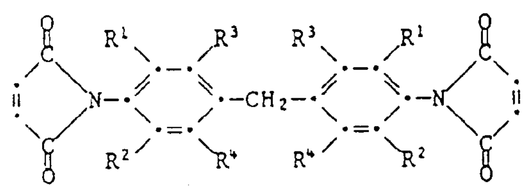 (I),

dans laquelle $R^1$ et $R^2$ sont identiques ou différents et représentent chacun un alkyle en $C_1$-$C_4$, et $R^3$ et $R^4$ représentent chacun, indépendamment l'un de l'autre, un atome d'hydrogène ou un atome d'halogène, et

b) un composé propénylique de formule II

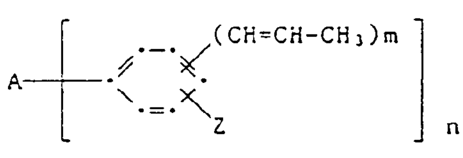 (II),

dans laquelle m et n représentent chacun, indépendamment l'un de l'autre, le chiffre 1 ou 2, Z est un

atome d'hydrogène ou un alcoxy en $C_1$-$C_4$ et A représente un reste de formule IIa, IIb ou IIc

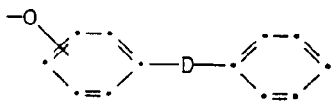 (IIa)

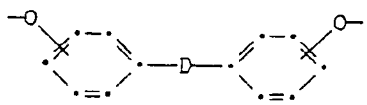 (IIb)

ou

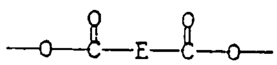 (IIc)

où D représente $-SO_2-$, -CO- ou un reste de formule III ou IV

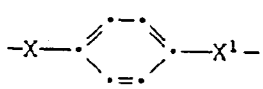 (III) ou 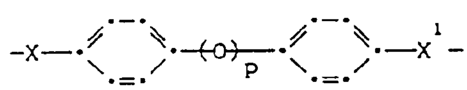 (IV)

où X et $X^1$ sont chacun indépendamment l'un de l'autre -CO-, $-SO_2-$ ou -O-, et p est zéro ou le chiffre 1, E représente un phénylène ou un reste de formule V

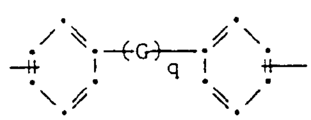 (V)

dans laquelle G représente 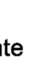 $(CH_3)_2$, 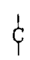 $(CF_3)_2$, -O-, $-CH_2-$ ou -CO-, et q est zéro ou le chiffre 1.

2. Mélanges selon la revendication 1, qui contiennent 0,05 à 2,0 moles, de préférence 0,5 à 1,2 mole, de constituant (b) par mole de constituant (a).

3. Mélanges selon la revendication 1, dans lesquels, dans la formule I, R1 et $R^2$ représentent chacun, indépendamment l'un de l'autre, un méthyle, un éthyle ou un isopropyle et $R^3$ et $R^4$ sont chacun un atome d'hydrogène ou un atome d'halogène.

4. Mélanges selon la revendication 1, dans lesquels, dans la formule I, $R^1$ et $R^2$ représentent chacun, indépendamment l'un de l'autre, un méthyle, un éthyle ou un isopropyle et $R^3$ et $R^4$ sont chacun un atome d'hydrogène.

5. Mélanges selon la revendication 1, contenant comme constituant (a) du 4,4'-méthylènebis[N-(2-éthyl-6-méthylphényl)maléimide] ou du 4,4'-méthylène-bis[N-(2,6-diméthylphényl)maléimide].

6. Mélanges selon la revendication 1, contenant un composé de formule II dans laquelle m est le chiffre 1 ou 2 et n est le chiffre 1, Z représente un atome d'hydrogène ou un méthoxy et A représente un reste de formule IIb ou IIc.

7. Mélanges selon la revendication 6, contenant un composé de formule II dans laquelle A représente un reste de formule IIb, dans laquelle D représente $-SO_2-$, -CO-,

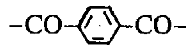

ou un reste de formule IV, dans laquelle X et $X^1$ sont chacun -CO- ou $-SO_2-$ et p est zéro.

**8.** Mélanges selon la revendication 6, contenant un composé de formule II dans laquelle A représente un reste de formule IIc, dans laquelle E est un phénylène ou un reste de formule V où q signifie zéro.

**9.** Mélanges selon la revendication 1, contenant comme constituant (b) de la 4,4′-bis(o-propénylphénoxy)benzophénone ou de la 4,4'-bis(o-propénylphénoxy)diphénylsulfone.

**10.** Produits réticulés infusibles obtenus par durcissement des mélanges selon la revendication 1.

**Revendications pour les Etats contractants suivants : ES**

**1.** Procédé de préparation de produits réticulés infusibles, caractérisé en ce que l'on durcit à une température comprise entre 100 et 280°C un mélange durcissable contenant

a) un bismaléimide aromatique de formule I

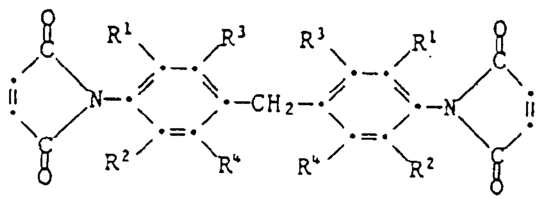

(I),

dans laquelle $R^1$ et $R^2$ sont identiques ou différents et représentent chacun un alkyle en $C_1$-$C_4$, et $R^3$ et $R^4$ représentent chacun, indépendamment l'un de l'autre, un atome d'hydrogène ou un atome d'halogène, et

b) un composé propénylique de formule II

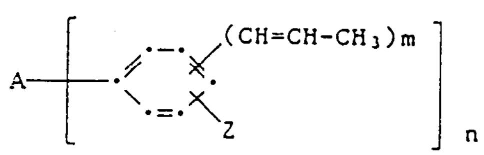

(II),

dans laquelle m et n représentent chacun, indépendamment l'un de l'autre, le chiffre 1 ou 2, Z est un atome d'hydrogène ou un alcoxy en $C_1$-$C_4$ et A représente un reste de formule IIa, IIb ou IIc

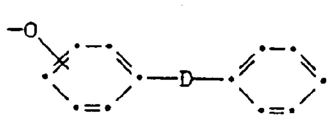

(IIa)

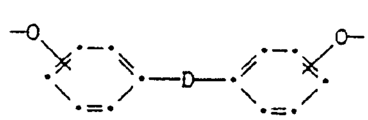

(IIb)

ou

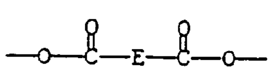

(IIc)

où D représente $-SO_2-$, -CO- ou un reste de formule III ou IV

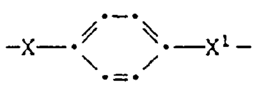 (III) ou 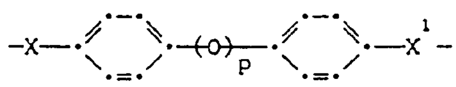 (IV)

où X et $X^1$ sont chacun indépendamment l'un de l'autre -CO-, $-SO_2-$ ou -O-, et p est zéro ou le chiffre 1, E représente un phénylène ou un reste de formule V

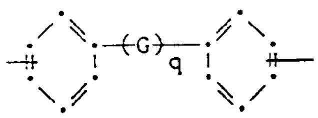 (V)

dans laquelle G représente C $(CH_3)_2$, C $(CF_3)_2$,-O-, $-CH_2-$ ou -CO-, et q est zéro ou le chiffre 1.

2. Procédé selon la revendication 1, caractérisé en ce que le mélange contient 0,05 à 2,0 moles, de préférence 0,5 à 1,2 mole, de constituant (b) par mole de constituant (a).